# EUROPEAN PATENT APPLICATION

(11) **EP 1 265 417 A2**
(43) Date of publication of application: **11.12.2002**
(21) Application number: 02253537.1
(22) Date of filing: 20.05.2002
(51) Int. Cl.: H04L 29/06, H04L 12/24

(54) **Device management system and method**

(30) Priority: 05.06.2001 US 875331
(71) Applicant: Hewlett-Packard Company, Palo Alto, CA 94304 (US)
(72) Inventor: Schmeling, Garth F., Boise, ID 83704 (US); Helms, Janine L., Boise, ID 83713 (US); Dyer, Daniel J., Boise, ID 83702 (US)
(74) Representative: Jackson, Richard Eric

(57) **Abstract**

A device management system (10) and method for use with a computer network (18) are provided. The method typically includes, in response to connection of the device (16) to the network (18), sending a message from the device (16) to the management application (22) via a well-known communication channel, announcing the presence of the device (16) on the network (18). The device (16) may be preconfigured with an agent (28a) and a codelet (34a) pair, and the method may include sending the agent (28a) from the device (16) to the management server (12). The method may also include setting a policy from the management application (22) governing codelet operations on the device (16). The method may further include subscribing from the management application (22) for notifications of codelet (34a) changes on the device (16).

## Description

### Field of the Invention

The present invention relates generally to installing and managing devices, such as printers, on a computer network.

### Background of the Invention

Installation and management of devices on computer networks involves a number of complicated tasks. In particular, installation of a printer on prior systems typically has required a system administrator to connect the printer to the network, and to configure a central server to recognize and communicate with the printer. The system administrator also typically has been required to input the network address of the printer to the server in order for the server to recognize the printer. For vast networks, having a large number of printers, this task may be complicated and time consuming.

Another problem with prior printer systems is that once printers are installed, it is difficult to add new functionality to the printers and central servers. Typically, this requires an administrator to extensively upgrade both the central server and each printer, independently. It is also difficult for administrators to manage the settings on a vast network of printers without independently accessing each printer and adjusting the settings therein.

### Summary of the Invention

A device management system and method for use with a computer network are provided. The system typically includes a server configured to execute a management application and to connect to the network, and a device configured to announce its presence to the management application on the server upon connection of the device to the network.

The method typically includes, in response to connection of the device to the network, sending a message from the device to the management application via a well-known communication channel, announcing the presence of the device on the network. The device may be preconfigured with an agent and a codelet pair, and the method may include sending the agent from the device to the management server. The method may also include setting a policy from the management application governing codelet operations on the device. The method may further include subscribing from the management application for notifications of codelet changes on the device.

### Brief Description of the Figures

Fig. 1 is a schematic view of a device management system according to one embodiment of the present invention.
Fig. 2 is a schematic view of a software architecture of the system of Fig. 1.
Fig. 3 is a flowchart of a method according to one embodiment of the present invention.
Fig. 4 is a flowchart of an exemplary method for performing the step of dynamically discovering the device, shown in the method of Fig. 3.
Fig. 5 is a flowchart of an exemplary method for performing the step of installing an agent/codelet pair, shown in the method of Fig. 3.
Fig. 6 is a flowchart of an exemplary method for performing the step of getting a new version of an agent/codelet pair, shown in the method of Fig. 3.
Fig. 7 is a flowchart of an exemplary method for performing the step of upgrading a codelet, shown in the method of Fig. 3.
Fig. 8 is a flowchart of an exemplary method for performing the step of adding a new codelet, shown in the method of Fig. 3.
Fig. 9 is a flowchart of an exemplary method for performing the step of deleting a codelet, shown in the method of Fig. 3.
Fig. 10 is a flowchart of an exemplary method for performing the step of setting a policy for future codelet activity, shown in the method of Fig. 3.
Fig. 11 is a flowchart of an exemplary method for performing the step of subscribing for notifications of codelet changes, shown in the method of Fig. 3.
Fig. 12 is a flowchart of an exemplary method for performing the step of batch configuring a set of devices, shown in the method of Fig. 3.
Fig. 13 is a flowchart of an exemplary method for performing the step of querying current device settings for a device, shown in the method of Fig. 3.
Fig. 14 is a flowchart of an exemplary method for performing the step of adjusting device settings, shown in the method of Fig. 3.
Fig. 15 is a flowchart of an exemplary method for performing the step of applying a transformation rule, shown in the method of Fig. 3.

### Detailed Description of the Invention

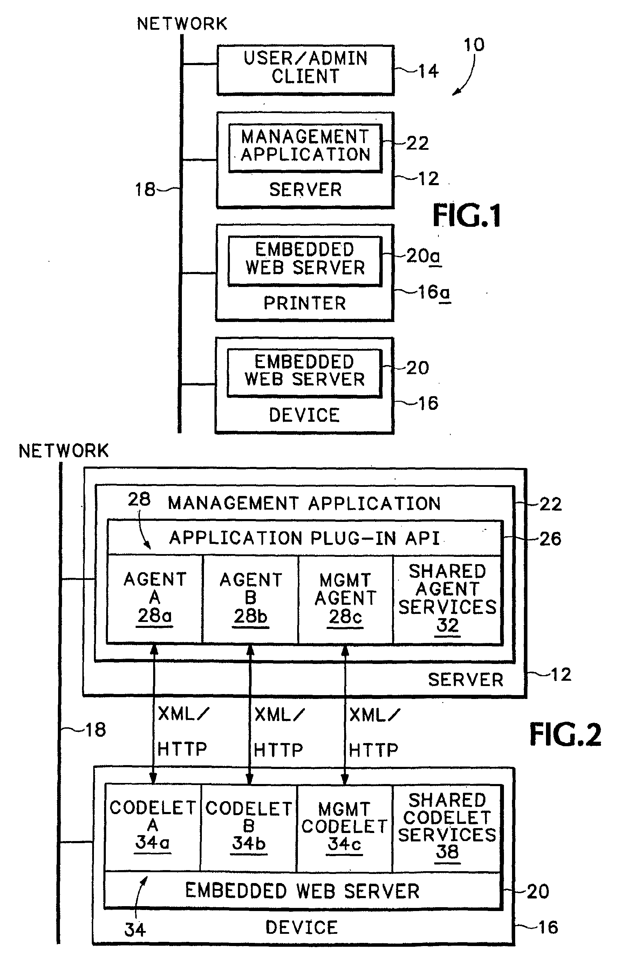

Referring initially to Fig. 1, a device management system according to one embodiment of the present invention is shown generally at 10. System 10 typically includes a server 12 and a user/administrative client 14, each configured to communicate with a plurality of devices 16 via a computer network 18. Each of devices 16 is configured to execute an embedded server, such as a web server 20. The web server is configured to communicate with a management application 22 executed on server 12, as well as with client 14, in order to enable users and administrators to interact with the devices, as described below.

Server 12 is typically a computer such as are commonly known in the art, and includes a processing unit and associated memory and mass storage device. For example, server 12 may be a personal computer, workstation, mainframe computer, or other computing device. Server 12 is typically configured to execute a management application 22 stored on the mass storage device using the processing unit and memory. The management application is configured to send and receive data and commands to and from devices 16 via network 18.

User/administrative client 14 is typically a computing device such as a personal computer, and includes a processing unit and associated memory and mass storage device. The user/administrative client is configured to execute a client application configured to interface with management application 22 of the server 12 to enable a user and/or administrator to interact with devices 16. For example, typically the user/administrative client is configured to enable a user or administrator to view and adjust settings on the devices 16, as described below.

Devices 16 are typically computer peripherals such as printers 16a. Each device typically includes an onboard or embedded server program, such as embedded web servers 20, 20a, as described above. The term "embedded" is used herein to describe a server program that is included on device 16 itself, rather than on a standalone server computer. Embedded web servers 20, 20a are configured to send and receive data and commands to and from management application 22 using the hypertext transfer protocol (HTTP) and extensible mark-up language (XML) protocols. Embedded web servers 20, 20a are configured to act as application servers. An application server is a program configured to act as an interface and enable a client 14 running a browser such as the Microsoft® Internet Explorer or Netscape® browser to interact with a computing device that does not otherwise communicate using browser-interpretable commands. Thus, application servers 20, 20a are configured to enable a browser on client 14 to interact with embedded content residing on device 16. Embedded content may include device settings, hardware or software configuration data, and virtually any other type of data that is "embedded" (i.e. stored on) the device. Because the embedded content is converted by the application server into browser interpretable form, the embedded content may also be referred to as embedded web content. Alternatively, instead of application servers 20, 20a being web servers, any other type of data serving software and/or communication protocols may be used.

In Fig. 2, a software architecture of system 10 is shown. Management application 22 of server 12 typically includes an associated application plug-in application programming interface (application plug-in API) 26. The application plug-in API 26 is configured to provide a communication interface between management application 22 and various plug-in program modules stored on server 12. The plug-in program modules typically contain executable software routines for use by management application 22.

These plug-in modules typically include one or more agents 28, and a shared agent services module 32. As used herein, the term "agent" is used to designate a program module resident on the server 12 that is configured to communicate with the management application 22 via the application plug-in API, and with a codelet 34 on device 16. Shared agent services module 32 is a program module configured to provide basic services to each of agents 28. Typically, agents 28 utilize these services by executing routines stored in the shared agent services module. The shared agent services module is configured to enable each of the agents 28 to communicate to device 16 via network 18, and with management application 22.

Agents 28 typically include one or more function-specific agents, such as agent A (28a), agent B (28b), and a management agent 28c. Function-specific agents A and B are configured to enable communication with device 16 related to a predetermined function, executed by a corresponding codelet. By way of example, the predetermined function may be adjustment of printer settings. Of course, more than one function may be handled by any given agent, and a wide variety of other predetermined functions may be implemented using the agents, as described below. Management agent 28c is typically configured to communicate with a corresponding management codelet 34c on device 16 in order to perform basic operations relating to the function-specific agents, such as adding, deleting, and upgrading the function-specific agents.

Device 16 typically comes preconfigured with one or more codelets 34, and a shared codelet services module 38. In addition, the agent/codelet pair may be transferred via the computer network from a remote agent codelet source, typically a web server at a well-known address. This transfer may be accomplished by "pushing" the agent/codelet pair. "Pushing" refers to sending data to a client without the client requesting the data. Codelets 34 typically include function-specific codelets, such as codelet A (34a) and codelet B (34b), and a management codelet 34c. As used herein the term "codelet" is used to refer to a program module stored on device 16. Each of device-side codelets 34 is typically paired with a corresponding server-side agent 28 to form an agent/codelet pair. The agent and codelet of each agent/codelet pair are configured to communicate with each other via network 18, in order to achieve a predetermined function. The predetermined function may be virtually any function. For example, the function may be adjusting a printer setting, configuring a printer, performing diagnostic tests, conducting job accounting tasks, managing supplies of paper, ink, and other consumable resources, etc.

Management codelet 34c and management agent 28c are configured to communicate with each other, for example, to perform basic management operations between server 12 and device 16, such as adding, upgrading, and deleting codelets, adjusting policy settings, sending notifications of changed codelets, etc., as described below. Shared codelet services module 38 contains basic routines accessible by all codelets 34, such as routines necessary to enable codelets 34 to communicate through network 18 and with management application 22.

Typically, the matched agent/codelet pairs are preinstalled on device 16, that is, codelets 34 and corresponding agents 28 are installed on device 16 before the device is connected to network 18 (typically at the manufacturer). The codelets may also be downloaded from an agent/codelet source at a well-known web location or installed from the management application. The agent/codelet pairs may stored in a memory device such as firmware, a hard drive, etc. As described below, the device is configured to upload agents 28 to server 12 after being connected to network 18. By uploading the agents to server 12, management application 22 may automatically be upgraded to achieve new functionality, without painstaking and time-intensive manual software upgrades of both the server and device by an administrator.

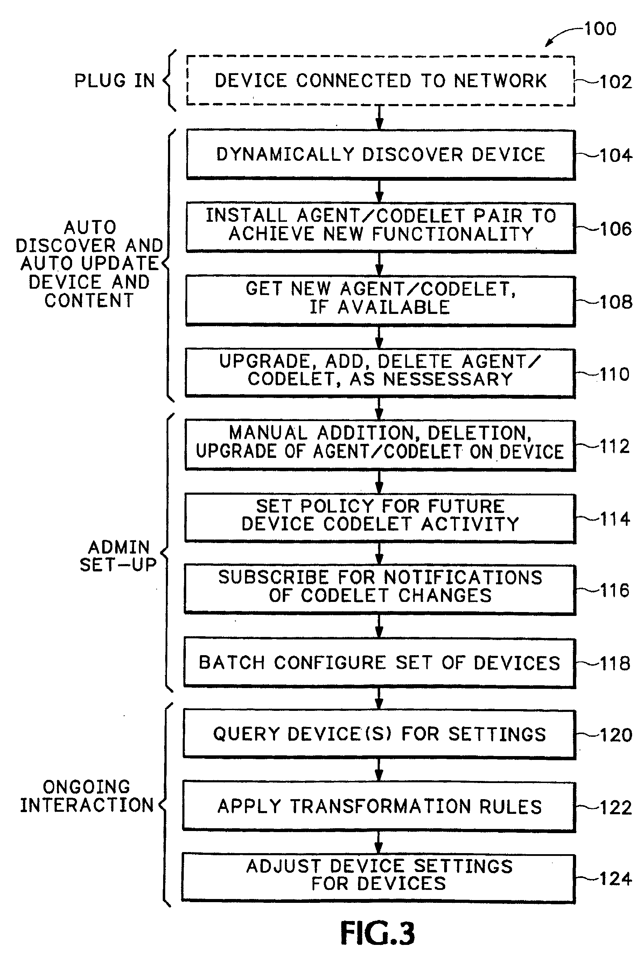

In Fig. 3, a method according to one embodiment of the invention is shown generally at 100. Method 100 typically includes, at 102, a user connecting a device 16 to a network 18. At 104, the method typically includes system 10 dynamically discovering the device 16. Typically, the device is configured to announce its presence to the management application on the server, automatically, upon connection of the device to the network. Thus, dynamic discovery of the device by the system at step 104 is typically accomplished by device 16 contacting management application 22 and reporting a device identifier and network address at which the device is located.

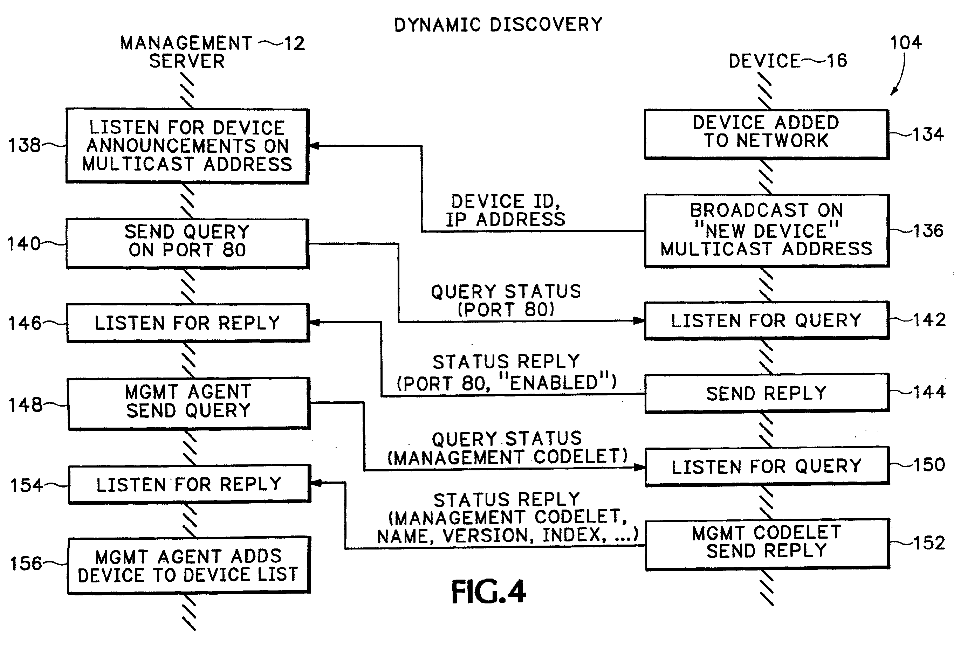

Fig. 4 shows at 104 an exemplary method of accomplishing dynamic discovery. It should be understood that Figs. 4-15 are time-based flowcharts having independent time axes for the method steps occurring at each device. At 134, the method includes adding the device to the network, similar to 102, discussed above. At 136, the method includes broadcasting from the device a signal (typically including a device identifier and an IP address) on a "new device" multicast address. This address typically is a well-known address, and server 12 is configured to listen for device announcements at this address, as shown at 138. As used herein, the term "well-known" address refers to an address known to both the listening server and to the multicasting device.

At 140, the method includes sending a status query for port 80 from the server to the device. It will be appreciated that port 80 is reserved for HTTP traffic, and another port and/or communication protocol may be used. At 142, the device listens for and receives the status query sent at 140. The method further includes, at 144, sending a reply from the device including an indication that port 80 is enabled for HTTP communication. At 146, the management application listens for and receives the reply, and at 148, the management application sends a status query for status of management codelet 34c.

At 150, the method further includes listening for and receiving the status query. At 152, the method includes sending a reply to the management application. The status reply typically includes status information related to the management codelet, such as management codelet name, version, index, etc. At 154, the method includes listening for and receiving the reply from device 16. At 156, the method typically includes the management application adding the device to an associated device list.

Turning again to Fig. 3, in steps 106 through 110, the method includes automatically discovering the device on the network and automatically discovering and updating content (typically agent/codelet pairs) stored on the device. The appropriate agent(s) used by the management application to communicate with the device are in turn transferred to and installed at the management server, without a user request to do so, as described in detail below.

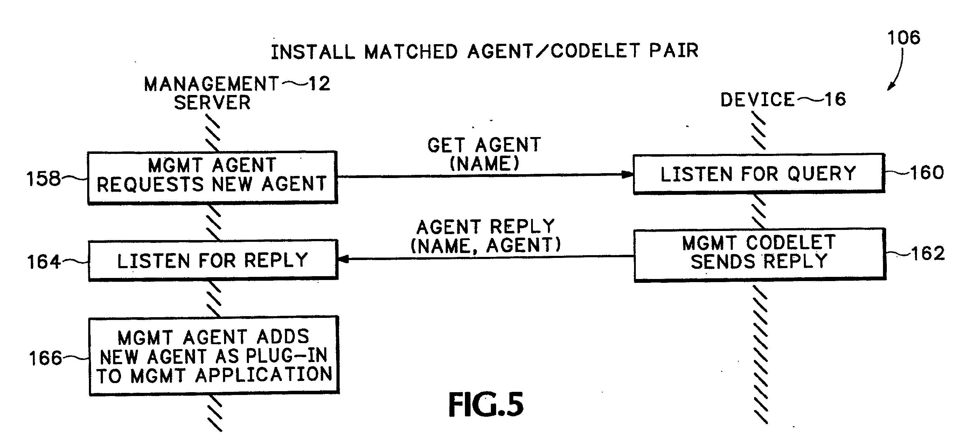

At 106, the method typically includes installing a matched agent/codelet pair to achieve new functionality. Fig. 5 shows in detail an exemplary method of accomplishing the step 106 of installing a matched agent/codelet pair. At 158, the method typically includes sending a request for a new agent from management agent 28c of the management application 22 to the management codelet 34c of device 16. Typically, this request is made by the management agent 28c automatically upon dynamic discovery of the device at 104. At 160, the method includes listening for and receiving the request for the new agent from the management application. At 162, the method typically includes sending a reply containing the unique identifier or name of the new agent and the new agent itself, from the management codelet 34c to the management agent 28c. At 164, the method includes listening for and receiving the reply. At 166, the method includes the management agent adding the new agent, typically as a plug-in, to the management system.

Returning to Fig. 3, at 108, method 100 typically includes getting new versions of the agents and codelets from an agent/codelet source 168, if available. Typically the agent/codelet source is a web server at a predetermined or well-known Internet address such as www.hp.com, or at a location on an intranet. This process may be initiated automatically by the management application or device, or may be initiated upon request by the administrator.

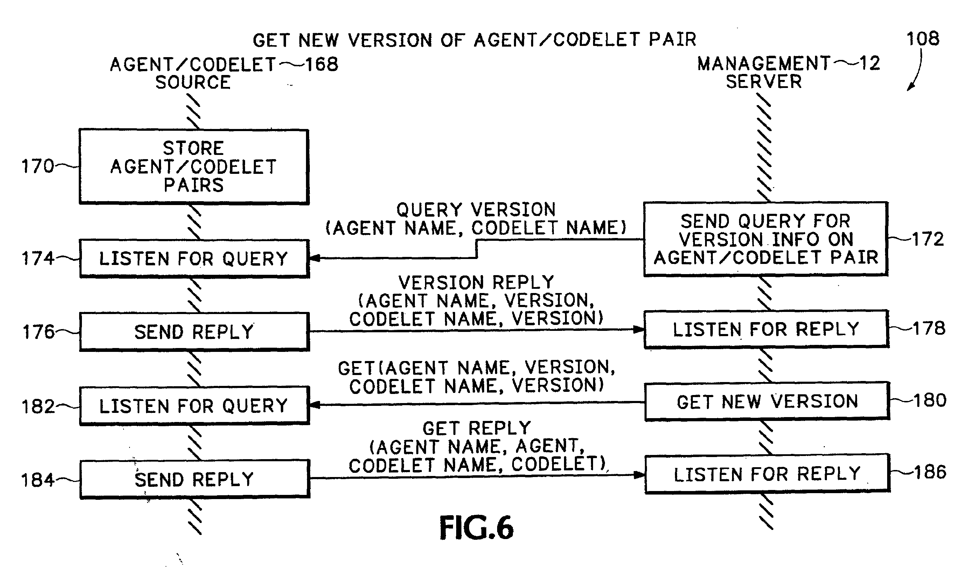

Fig. 6 shows in detail an exemplary method of accomplishing the step 108. At 170, the method includes storing the agent/codelet pairs in a database associated with the agent/codelet source 168. At 172, the method typically includes sending a version query from the management application 22 to the agent/codelet source 168 for version information for a particular agent/codelet pair. At 174, the method typically includes listening for and receiving the query at the agent/codelet source 168. At 176, the method typically includes sending a version reply from the agent/codelet source 168 to the management server 12 containing the agent name and version, and the codelet name and version. At 178, the method typically includes listening for and receiving the version reply, at the management server. The management server can also get the agent from an agent/codelet source, typically at a well-known Internet or intranet location.

At 180, if the management application determines that the current version of any of agents 28 or codelets 34 is out of date, the method typically includes sending a get request for a new version of the agent and/or codelet to the agent/codelet source 168 from management server 12. At 182, the method typically includes listening for and receiving the get request, at the agent/codelet source. At 184, the method typically includes sending a reply containing the agent name and the agent itself, as well as the codelet name, and the codelet itself, from agent/codelet source 168 to management server 12. At 186, the method typically includes listening for and receiving the get reply at the management server.

Returning to Fig. 3, at 110, method 100 typically includes upgrading, adding, and/or deleting agents and codelets, as necessary. Typically, this is accomplished by upgrading those codelets and/or agents for which new versions were determined to be available at 108. Alternatively, the agent/codelet source 168 may instruct the server, at 108, that a new agent or codelet should be added or an out-of-date agent or codelet should be deleted from management server 12, and the server at 110 will automatically add or delete the agent or codelet, as necessary. The codelets and agents are typically upgraded, added, and deleted in pairs.

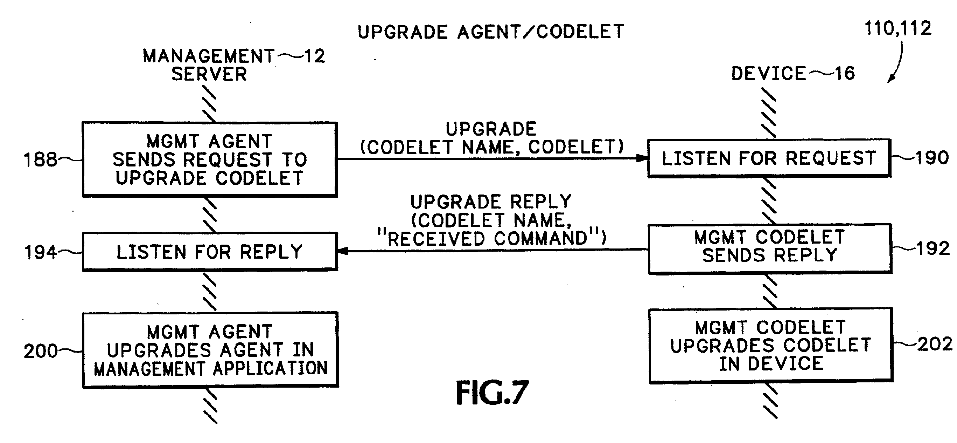

Fig. 7 shows in detail an exemplary method of accomplishing the step of upgrading a agent/codelet pair at 110. At 188, the method typically includes sending an upgrade request from the management agent to the management codelet. Typically the upgrade request contains the name of the new version of the codelet and the new version of the codelet itself. At 190, the method typically includes listening for and receiving the upgrade request at device 16. At 192, the method typically includes sending a reply from the device to the management server, the reply including the codelet name and verification that the upgrade request has been received by device 16. At 194, the method typically includes listening for and receiving the reply. At 200, the method typically includes upgrading the agent in management application 22, by deleting the old version of the agent and replacing it with the new version, via management agent 28c. At 202, the method typically includes upgrading the codelet in device 16, by deleting the old version of the codelet and replacing it with the new version, via the management codelet 34c.

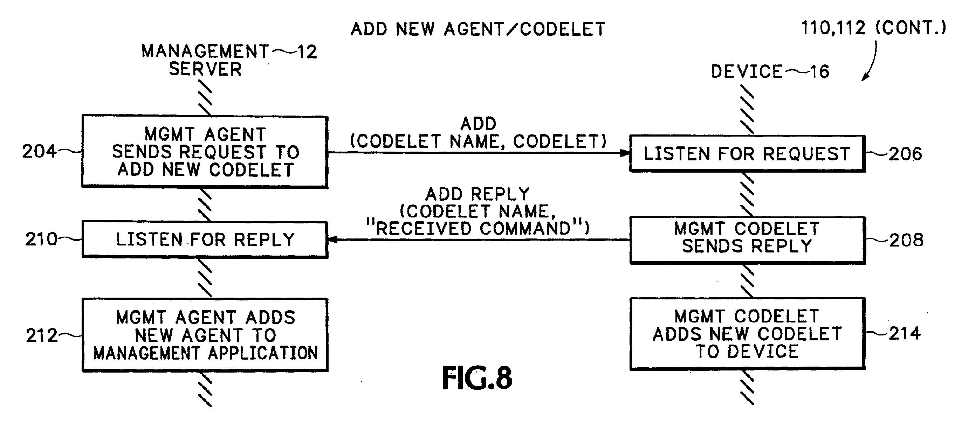

Fig. 8 shows in detail an exemplary method of accomplishing the step of adding a new agent/codelet pair at 110. At 204, the method typically includes sending an addition request to add a new codelet from management agent 28c on management server 12 to management codelet 34c on device 16. The request typically contains the name of the codelet to be added, and the codelet to be added, itself. At 206, the method typically includes listening for and receiving the addition request. At 208, the method typically includes sending a reply from the management codelet 34c to the management agent 28c, the reply including the codelet name and an acknowledgement that the addition request was received. At 210, the method typically includes listening for and receiving the reply. At 212, the method typically includes adding the new agent corresponding to the new codelet to the management application. At 214, the method typically includes adding the new codelet to the device.

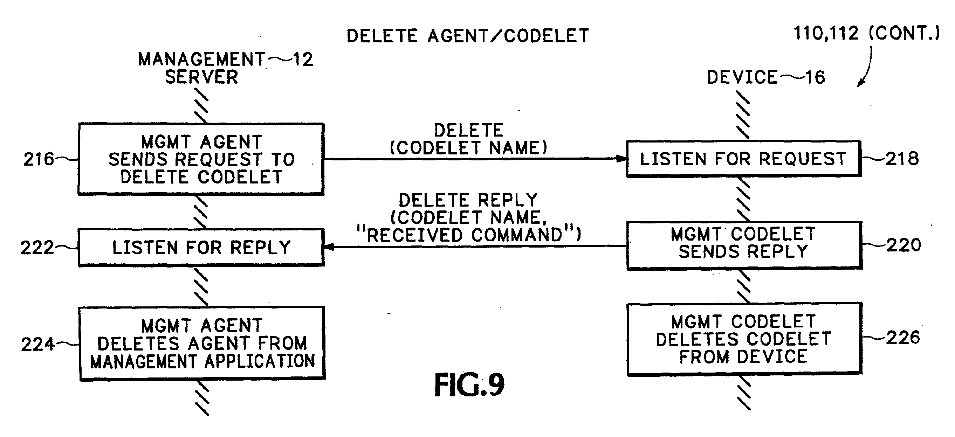

Fig. 9 shows in detail an exemplary method of accomplishing the step of deleting an agent/codelet pair at 110. At 216, the method typically includes sending a deletion request to delete the codelet from the device. The request is sent from the management server to the device. Typically, the deletion request contains the name of the codelet to be deleted. At 218, the method further includes listening for and receiving the deletion request. At 220, the method includes sending a reply from management codelet 34c to management agent 28c, the reply including the name of the codelet and verification that the deletion request was received. At 222, the method further includes listening for and receiving the reply. At 224, the method includes deleting the agent corresponding to the codelet to be deleted from the management server. At 226, the method includes deleting the codelet to be deleted from the device.

Turning again to Fig. 3, in steps 112 through 118, method 100 includes setting-up the device and management server to interact with each other. Typically, this set-up is performed by an administrator accessing the management server and device from an administrative client, such as client 14.

At 112, the method typically includes manually adding, deleting, and upgrading one or more codelets on device 16 and the corresponding agents on server 12. Typically, these tasks are performed by an administrator by sending commands from an administrative client 14 to device 16. The process of upgrading, adding, and deleting at 112 is typically similar to the processes shown in detail in Figs. 7-9. The manual modifications to the codelets on device 16 leads to step 114.

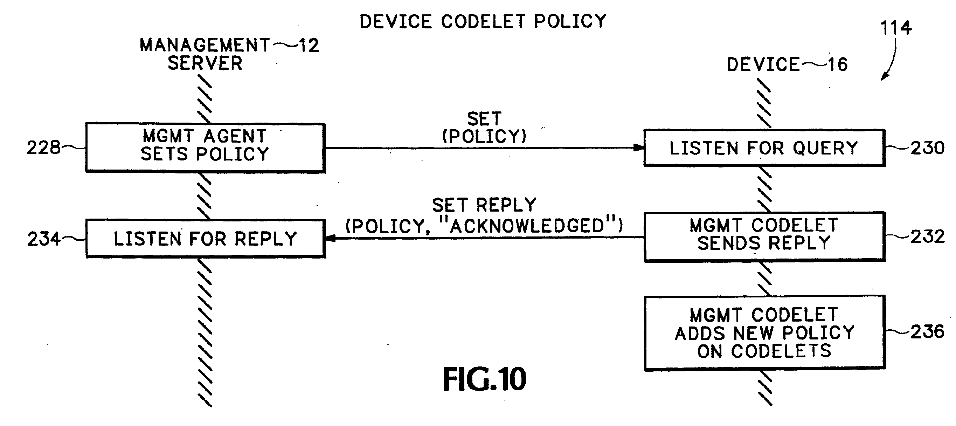

At 114, the method typically includes setting a policy for future device codelet activity. The policy is typically set by the administrator from the administrative client 14. Fig. 10 shows in detail an exemplary method of accomplishing the step of setting a device codelet policy. At 228, the method typically includes sending a request from the management agent 28c to the management codelet 34c to set a policy setting on device 16. At 230, the method typically includes listening for and receiving the set request. At 232, the method typically includes sending a reply including the policy name and an acknowledgement that the set request was received. At 234, the method includes listening for and receiving the request at the management server. At 236, the method typically includes adding the new policy on the device. Policies typically govern the operations that are permissible on codelets 34 of device 16, and the manner in which codelets 34 are executed on device 16. Exemplary policies may include "accept no new codelets," "accept no new codelet upgrades," "accept no codelet deletions," or "run codelet once and exit." The policy may also concern the functions that a codelet can perform. For example, the policy may govern access to a file system or deleting print jobs, etc.

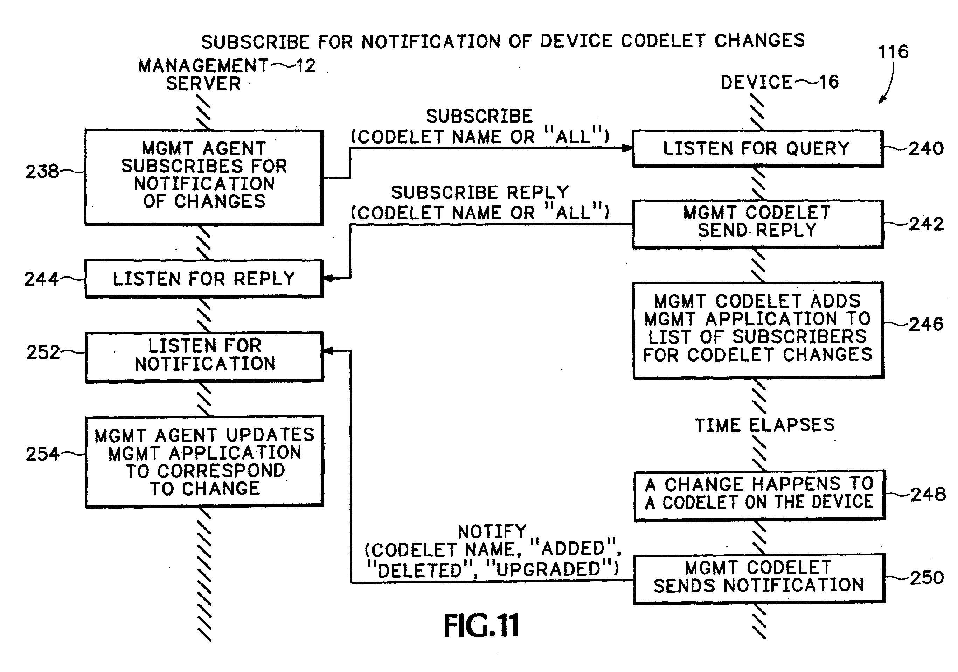

Returning to Fig. 3, at 116, method 100 further includes subscribing for notifications of codelet changes from the device. Fig. 11 shows in detail an exemplary method of accomplishing the step of subscribing for notifications of codelet changes. At 238, the method typically includes sending a subscribe request to subscribe for notifications of changes from the management agent 28c on the management server 12 to the management codelet 34c on the device 16. Typically, the subscribe request includes the name of the codelet or codelets for which notification of changes is required. For example, notifications may also include application-specific alerts, which an agent and corresponding codelet are configured to manage. Exemplary application-specific alerts may include a low on toner alert, and an out of paper alert, etc. Additionally, the subscribe request may designate that notifications be sent for all codelet changes. At 240, the method typically includes listening for and receiving the subscribe request at the device. At 242, the method typically includes sending a subscribe reply to the subscribe request from the management codelet to the management agent. At 244, the method includes listening for and receiving the reply.

At 246, the method further includes adding the management application to the list of subscribers for changes to the indicated codelets. At 248, after time elapses, the method typically includes detecting a change to a codelet on the device. At 250, the management codelet sends a notification to the management application. The notification typically includes the name of the affected codelet, and the change that has occurred, such as "Added," "Deleted," "Upgraded," etc. At 252, the method typically includes listening for and receiving the notification at the management server. At 254, the method typically includes updating the management application, to correspond with the change. Typically, this is accomplished by adding, deleting, or upgrading the agent corresponding to the affected codelet, as appropriate.

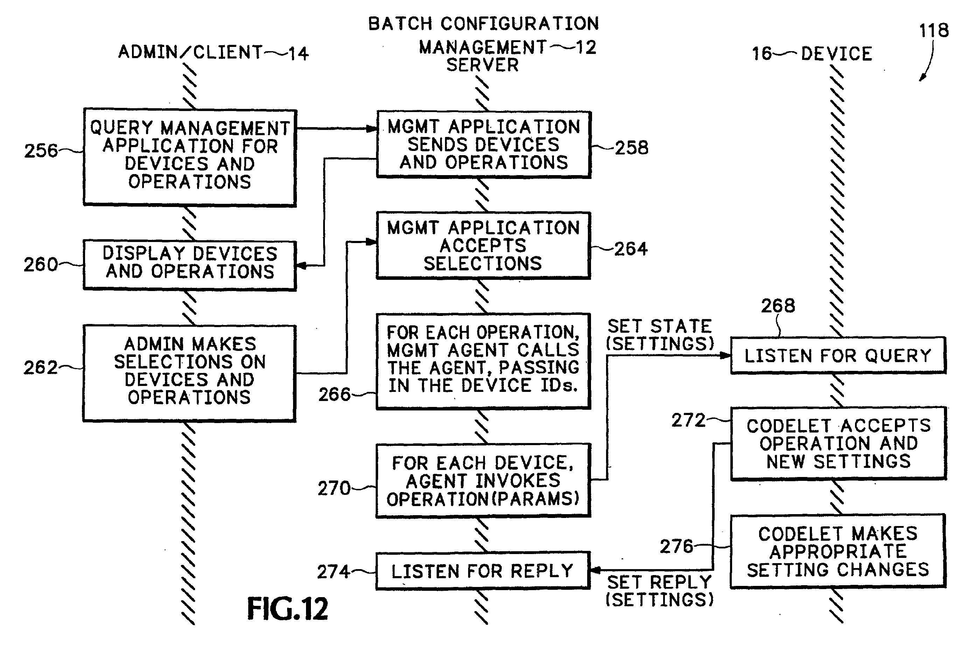

Returning to Fig. 3, at 118, the method typically includes batch configuring a set of devices 16. Fig. 12 shows in detail an exemplary method of accomplishing the step of batch configuring a set of devices. At 256, the method includes sending a query from administrator client 14 to the management application 22 for devices and corresponding device operations available within device management system 10. Typically, the operations affect corresponding device settings within each device. At 258, the management application receives the request and sends the devices and operations back to the client 14. At 260, client 14 displays the devices and operations to the administrator. At 262, the method further includes receiving an administrator selection relating to a set of devices and operations and sending the administrator selection to the management application. At 264, the method includes accepting the selection at the management application.

At 266, the method includes, typically for each operation selected, the management agent 28c calling the appropriate agent for the operation and passing in device identifiers for each selected device. The method further includes, at 270, sending from the selected agent, a set state command to each selected device. The set state command instructs each device to adjust a device setting within the device to correspond with the administrator-selected operation at 262. At 268, the method includes listening for and receiving the set state command. At 272, the method includes receiving or accepting the operation at a codelet on the device. The device sends a reply to indicate the set state command was received, which is listened for and received at 274. At 276, the method includes making appropriate setting changes at the codelet, typically by setting the codelet settings to the newly requested settings.

Returning to Fig. 3, steps 120-124 illustrate an exemplary ongoing user interaction with management system 10. It will be appreciated that for steps 120-124, "user" refers to an administrator or user with certain administrative privileges on devices.

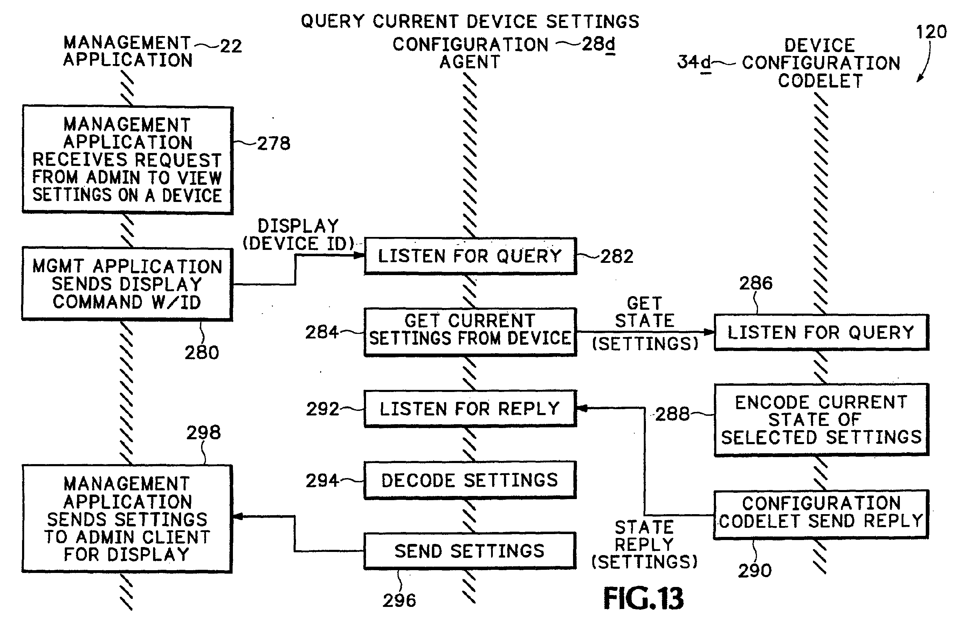

At 120, method 100 typically includes querying one or more devices for device settings. Fig. 13 shows in detail an exemplary method of accomplishing the step of querying the devices for settings. At 278, the method typically includes receiving a request at the management application from a user client 14 to view settings on a user selected device 16. At 280, the method includes sending a display command from the management application to the configuration agent, shown at 28d. The configuration agent is an agent 28 stored on management server 12, which is configured to communicate with a configuration codelet 34d, stored on device 16. The display command typically includes the device identifier for the user selected device.

At 282, the method includes listening for and receiving the display command. At 284, the method typically includes requesting the current settings from the user selected device by sending a get current settings command from the configuration agent 28d to the configuration codelet 34d. At 286, the method includes listening for and receiving the settings request. At 288, the method typically includes encoding the current state of selected settings, thereby preparing the settings for transmission to the configuration agent. At 290, the method includes sending the device settings from the configuration codelet on the user selected device to the configuration agent on the management application.

At 292, the method typically includes listening for and receiving the settings. At 294, the method typically includes decoding the settings. At 296, the method typically includes sending the settings to the management application. At 298, the method includes sending the settings from the management application to the user client for display to the user.

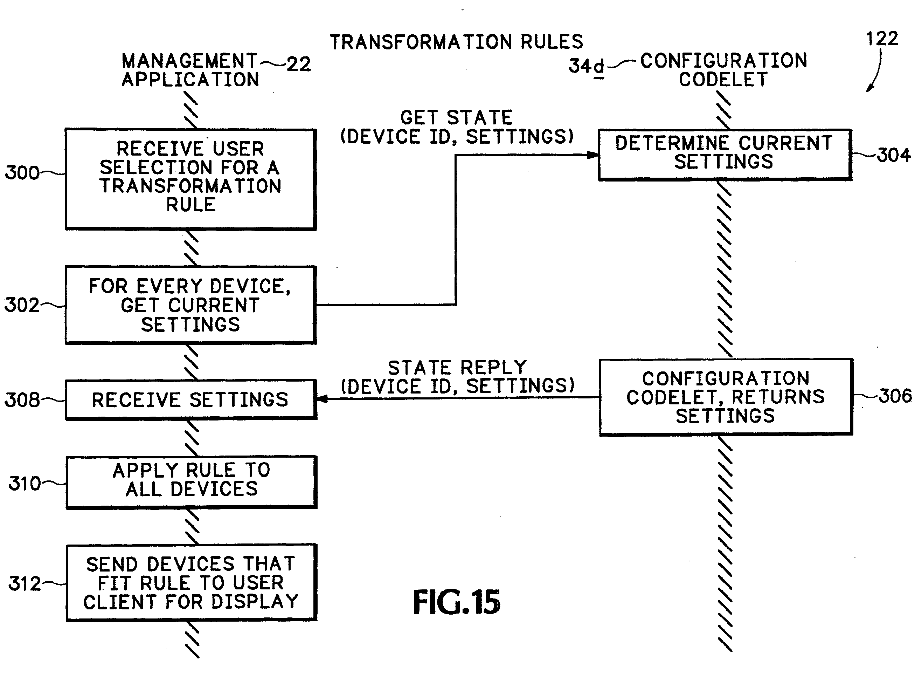

Returning to Fig. 3, at 122, method 100 typically includes applying a transformation rule to display the settings of one or more devices. Fig. 15 shows in detail an exemplary method of accomplishing the step of applying a transformation rule. At 300, the method includes receiving a user selection for a transformation rule. The transformation rule may include a request to view all devices within a user selected set of target devices, which include (or exclude) a user requested parameter such as a device class, an alterable device setting, a static device setting such as a device hardware configuration, etc.

A wide variety of transformation rules may be applied. For example, the user may choose to use a consolidation rule that classifies all devices into a set of two or more classes (e.g. Error, Warning, OK) based on dynamic changes that occur to the device. An exception transformation rule may be applied that lists all devices that have a setting which is an exception to the rule. A coalesce transformation rule may be applied, which groups all devices into classifications based on static device settings (e.g. all devices with a duplexer, or with more than 16 MB RAM). An exclusion transformation rule may be applied that lists all devices but those that have a specified setting. A subsetting transformation rule may be applied that lists all devices that have a subset of device settings. Finally, a transformation rule may be included that transforms content at the management application, for example, to change a default language setting from English to French, or to change a series of device alerts into one alert for a root cause.

At 302, the method includes getting current settings for every device requested. This is typically accomplished by sending a get state request with the device identifier and the settings parameter from the configuration agent 28d of the management application 22 to the configuration codelet 34d of the target device 16. At 304, the method typically includes receiving the settings request at the configuration codelet 34d, and in response, determining the device settings by querying the various other codelets on the device. At 306, the method includes sending the current settings for the device from the configuration codelet 34d to the configuration agent 28d of management application 22.

At 308, the method typically includes receiving the settings for all target devices. At 310, the method typically includes applying the transformation rule selected to all target devices. At 312, the method includes sending all of the devices that fit the rule to the user client for display.

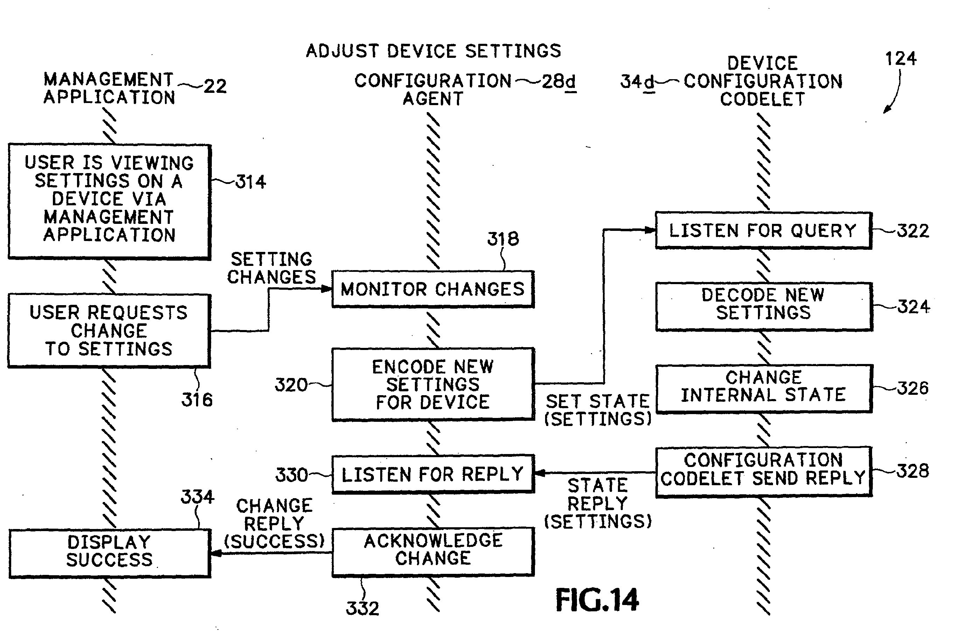

Returning again to Fig. 3, at 124, method 100 includes adjusting the device settings for the user selected devices. Fig. 14 shows in detail an exemplary method of accomplishing the step of adjusting the device settings. At 314, the method typically includes a user viewing settings of a device via management application 22 and user client 14. At 316, the method includes receiving a user request to make changes to settings and sending the request from the management application 22 to a configuration agent 28d associated with the management application. At 318, the method includes monitoring for changes, and receiving the changes at the configuration agent. At 320, the method typically includes encoding new settings for the device, and sending the encoded settings to device configuration codelet 34d of the user selected device. At 324, the method typically includes decoding the new settings. At 326, the method includes changing the settings internal to the device. At 328, the method typically includes sending a reply from the configuration codelet 34d to the configuration agent 28d at the management application. At 330, the method typically includes listening for and receiving a reply from the configuration codelet 34d. At 332, the method typically includes sending an acknowledgement from the configuration agent 28d to the management application 22 through which the user is adjusting the settings. At 334, the method includes displaying a message to the user indicating that the requested device setting change was completed successfully.

While the present invention has been particularly shown and described with reference to the foregoing exemplary embodiments, those skilled in the art will understand that many variations may be made therein without departing from the spirit and scope of the invention as defined in the following claims.

## Claims

1. A device management system (10) for use with a computer network, the system comprising: a server (12) configured to execute a management application (22), the server (12) being configured to connect to the network (18); and a device (16) configured to announce its presence to the management application (22) on the server (12) upon connection of the device (16) to the network (18).

2. The system of claim 1, further including an agent/codelet pair including an agent (28a) and a codelet (34a), wherein the device (16) is configured to execute the codelet (34a) and the management application (22) is configured to execute the agent (28a), and the agent (28a) and codelet (34a) are configured to communicate with each other via the network (18) to achieve a predetermined function.

3. The system of claim 2, wherein the agent/codelet pair is preinstalled on the device (16) prior to installation of the device (16) on the network (18).

4. The system of claim 2, wherein the device (16) is configured to upload the agent (28a) to the management application (22), after announcing its presence to the management application (22).

5. The system of claim 2, wherein the management application (22) is configured to contact an agent/codelet source (168) and download a new version of the agent/codelet pair.

6. A device management system (10) for use with a computer network (18), the system comprising: a management server (12) configured to execute a management application (22), the server (12) being configured to connect to the network; and a device (16) including an embedded application server (20) configured to serve embedded web content, wherein embedded application server (20) of the device (16) is configured to contact the management application (22) of the management server (12) and communicate the embedded web content to the management application (22) automatically upon connection of the device (16) to the network (18).

7. A device management system (10) for use with a computer network (18), the system comprising: a management server (12) configured to execute a management application (22), the management server (12) being configured to connect to the network (18); and a device (16) configured to connect to the network (18) and communicate with the management application (22), the device including an embedded server (20) and at least one agent/codelet pair having an agent (28a) and a codelet (34a), wherein the embedded server (20) is configured to automatically upload the agent (28a) to the management application (22) of the management server (12); wherein the management application (22) is configured to install the agent (28a) at the management server (12); and wherein, after installation of the agent (28a) at the management server (12), the agent (28a) and the codelet (34a) are configured to communicate with each other to achieve a predetermined functionality.

8. A method for managing one or more devices (16) connected to a computer network (18), the method comprising: in response to connection of a device (16) to the network (18), sending a message from an embedded server (20) on the device to a management application (22) on a management server (12) via a well-known address, thereby announcing the presence of the device (16) on the network (18).

9. The method of claim 8, further comprising, preconfiguring the device with an agent/codelet pair.

10. The method of claim 9, further comprising, sending the agent from the device to the management server.

11. The method of claim 10, further comprising setting a policy from the management application governing codelet operations on the device.

12. The method of claim 10, further comprising subscribing from the management application for notifications of codelet changes on the device.

13. A method for managing devices (16) on a computer network (18), the method comprising: connecting a device (16) to a network (18), the device (16) including an embedded server (12) and at least one agent/codelet pair having an agent (28a) and a codelet (34a), wherein the embedded server (12) is configured to automatically upload the agent (28a) of the agent/codelet pair to a management application (22) of a management server (12) connected to the network (18); sending the agent (28a) from the device (16) to the management server (12); installing the agent (28a) at the management server (12); communicating between the agent (28a) installed at the management server (12) and the codelet (34a) on the device (16).

14. A program storage apparatus readable by a machine, the storage apparatus tangibly embodying a program of instructions executable by the machine to perform a method for use in utilizing a print service, the method comprising: in response to connection of a device (16) to a network (18), sending a message from an embedded server (20) on the device (16) to a management application (22) on a management server (12) via a well-known address, thereby announcing the presence of the device (16) on the network (18).
